# EUROPEAN PATENT SPECIFICATION

(11) **EP 0 696 225 B1**
(45) Date of publication and mention of the grant of the patent: **18.12.1996**
(21) Application number: 94914995.9
(22) Date of filing: 06.05.1994
(51) Int. Cl.: B01D 21/00, B01D 21/01, B01D 21/06, B01D 21/24

(54) **PRESSURE DECANTER**
DRUCKDEKANTIERVORRICHTUNG
DECANTEUR SOUS PRESSION

(30) Priority: 07.05.1993 US 59445
(43) Date of publication of application: 14.02.1996
(73) Proprietor: ALCAN INTERNATIONAL LIMITED, Montreal Quebec H3A 3G2 (CA)
(72) Inventor: IIDA, Fusanosuke, Shizuoka-Ken 424 (JP); STEWART, Fitzgerald, Mandeville, Manchester (JM); PUXLEY, Donald, Jonquiere, Quebec G7S 2N9 (CA); FULFORD, George, D., Kingston, Ontario K7M 1L6 (CA)
(74) Representative: Gaunt, Robert John
(86) International application number: PCT/CA94/00246
(87) International publication number: WO 94/26383

(56) References cited:
- EP-A- 0 422 893
- WO-A-86/00879
- US-A- 4 274 958
- US-A- 4 603 000

## Description

### Technical Field

This invention relates to an apparatus for separating solids from liquid under pressure and more particularly to a pressurized decanter system for separating red mud from Bayer process liquor without need to depressurize the slurry.

### Background Art

The Bayer process, now more than 100 years old, extracts alumina from bauxite ore by contacting crushed or pulverized bauxite with a hot solution of caustic soda, whose concentration of NaOH is usually expressed as equivalent Na₂CO₃, to dissolve the aluminum hydroxides contained therein as sodium aluminate. This solution of high sodium aluminate concentration is called pregnant liquor. The remaining undigested insoluble residue, known as red mud, is separated from the solution, usually by filtration or sedimentation or both.

Red mud typically includes large quantities of finely divided solids resistant to separation. Alumina manufacturing therefore creates a need for improved separation systems, particularly those that can rapidly separate large quantities of slurries in an efficient manner.

In this connection, some preliminary attempts appear to have been made to use pressurized settling devices in clarifying finely divided solids from slurries. U.S.-A-2,107,919 (Turner) appears to discuss a pressure digester placed between two blow off tanks. U.S.-A-4,994,244 (Fulford) states that separation of red mud from the digested slurry can be carried out at a temperature below the boiling atmospheric temperature of the liquor phase of the slurry. U.S.-A-5,080,803 (Bagatto) discusses a process and apparatus for decanting suspensions at and above the atmospheric boiling point of the suspension. The apparatus operates at atmospheric pressure.

While the foregoing references discuss attempts to increase separation efficiency of finely divided solids from slurries, there exists a need, particularly in the aluminum industry, for improved systems to carry out separation at high pressure and temperature.

### Disclosure of the Invention

The present invention relates to an apparatus for separating solids suspended in an incoming pressurized liquid slurry.

The apparatus of the invention includes an elongated, upright vessel of generally circular cross-section having a closed top end and a bottom sump for accumulating solids. A feedstock inlet is provided for feeding a liquid slurry into the vessel and a flocculant injector is provided for injecting flocculant into the liquid slurry feedstock. The vessel also includes an outlet for discharging clarified liquid in an upper region thereof and an outlet in the bottom sump for drawing off separated solids. Other features of the vessel include a means for detecting the level of thickened slurry bed in the vessel and a raking/dewatering device for slurry extending into the bottom sump.

In accordance with the present invention, the apparatus of above type is specially adapted for use in carrying out separation at high pressure and temperature. This includes a feedstock inlet system for receiving pressurized liquid slurry including an elongated cylindrical feedwell mounted axially in an upper region of the vessel with an annular space between the feedwell and vessel wall, this feedwell having an open bottom, an opening in an upper region thereof and a feed inlet for the liquid slurry located in a side wall of the feedwell between the open bottom and upper opening.

The feedstock inlet into the feedwell is located a distance above the open bottom of the feedwell sufficient to permit substantial flocculation of solids and clarification of liquid within the feedwell. Also, the open bottom of the feedwell is positioned above the surface of a thickened slurry bed in the vessel a distance sufficient to permit clarified liquid emerging downwardly from the bottom of the feedwell to separate from the flocculated solids and travel upwardly in the annular space between the feedwell and vessel walls to discharge through the upper outlet without substantially disturbing the thickened slurry bed. The outlet for discharging clarified liquor is adapted to operate under pressure, as is the outlet in the bottom of the sump.

Preferably the upper opening in the feedwell is located to permit a portion of the clarified liquid travelling upwardly through the annular space to enter the feedwell through the opening in such a manner as to provide an inverted chimney effect within the feedwell. Thus, the portion of clarified liquid entering the upper opening of the feedwell travels downwardly through the feedwell, mixing with and diluting the incoming feed slurry which aids flocculation. The upper opening also permits the disengagement of the accumulation of gas bubbles that would otherwise hinder flocculation and settling.

The pressurized liquid slurry being fed to the apparatus normally has a flocculant incorporated therein and this flocculant is typically added by way of at least one injector mounted within an inlet pipe connected to the feed inlet of the feedwell. Typically, two injectors are used, the first being located adjacent the feed inlet of the feedwell and the second injector being located upstream from the first injector.

The elongated, upright pressure vessel of the invention is typically a cylindrical vessel of substantially uniform cross-section. However, according to an alternative embodiment of this invention it is possible to use a vessel having a lower section of larger cross-section and a cylindrical upper section of smaller cross-section. It is, of course, necessary to have as low as practical an average upflow velocity of the separating clarified liquid in the zone in which the flocculated solids are separating and falling downwardly from the lower end of the feedwell toward the bed of thickened slurry, thereby hindering the downward passage of the solids as little as possible. For this reason, the vessel must have a relatively large diameter in this portion of its height. On the other hand, the portion of the vessel extending above the lower end of the feedwell does not have this velocity restriction and it has quite surprisingly been found that very clear overflow liquids containing as little as 25 mg/l suspended solids can be obtained even in cases where the average upflow velocity of the separated liquid in the annular space between the feedwell and vessel is 20 to 25 m/h or higher. For this reason, the diameter of the upper portion of the pressure vessel can be considerably smaller than the lower portion of the vessel.

This provides important advantages in substantially lowering the costs of material for a pressure vessel and, furthermore, the relatively high velocity of the liquid travelling upwardly through the annular space between the vessel wall and feedwell considerably decreases scaling of the surfaces of the vessel.

The lower portion of larger cross-section can be spherical in shape or it may be in the form of a low, relatively fat cylinder with upper and lower conical portions, or a polyhedron, or a combination of these shapes. Preferably the maximum diameter of the lower section is at least 1.75 times the diameter of the smaller upper section.

The means for detecting the level of the thickened slurry bed within the vessel is preferably in the form of a series of pressure differential detectors mounted in the cylindrical wall of the vessel. It is important that these not interfere with the settling of the thickened slurry bed and therefore should protrude as little as possible into the interior of the vessel.

### Brief Description of the Drawings

FIG. 1 is a front view in section of the improved pressure decanter of the present invention.
FIG. 2 is a sectional view, partially broken away, of the improved pressure decanter of FIG. 1, taken along line 2-2 in FIG. 1.
FIG. 3 is a sectional view of the improved pressure decanter of FIG. 1 taken along line 3-3 in FIG. 1.
FIG. 4 is a schematic representation of a mounting for a level indicator for use in the improved pressure decanter of FIG. 1.
FIG. 5 is a schematic representation of an alternative form of decanter vessel.
FIG. 6 is a schematic representation of a still further form of decanter vessel, and
FIG. 7 is a graphical representation of settling in the improved pressure decanter of FIG. 1 measured level detectors.

### Best Modes For Carrying Out the Invention

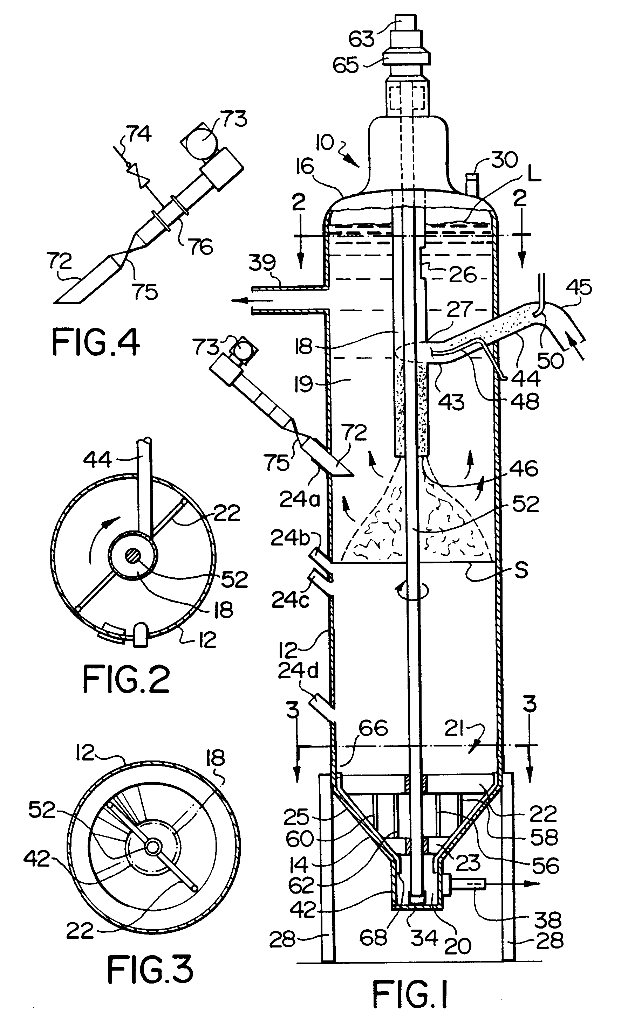

FIGS. 1-4 illustrate a preferred embodiment of the pressure decanter of the present invention generally designated with the reference number 10. The pressure decanter 10 generally includes a cylindrical pressure vessel 12, a preferably conical bottom section 14, a closed upper end 16, a deep feedwell 18 for incoming pressurized slurry, and a sump 20 below the conical bottom section 14 to facilitate removal of solids under pressure from the decanter 10. It also has an upper outlet 39 for discharging clarified liquid under pressure. Furthermore, it includes a raking/dewatering device 21 inside the bottom section 14, a plurality of mud level detectors 24 to determine the level of settled solids. The vessel 10 stands generally upright as shown in FIG. 1 and is supported by legs 28.

The cylindrical pressure vessel 12 has an elongated cylindrical vessel wall of sufficient strength and thickness to withstand the pressures, temperatures and corrosiveness of the contents such as pressurized slurry of red mud in pregnant caustic liquor solution. The preferred material of fabrication for the vessel is mild steel of a thickness of about 1.5 cm. or more, depending on the pressure. For example, an exemplary embodiment for use in the Bayer process has a height and diameter of 14 m. and about 3 m., respectively.

The cylindrical pressure vessel 12 has a dish-shaped closed upper end 16 and a plurality of vents 30 to permit release of accumulated gases that accumulate in the vessel 12 during operation. The vents 30 are operated manually as the need arises or they may be operated automatically, by a timing device. The cylindrical pressure vessel 12 is elongated as shown in FIG. 1 and preferably has a length-to-diameter ratio of between 2 and 6:1. In a preferred embodiment the length-to-diameter ratio approximates 4.5:1. Adjustments can be made to the length and width depending on the particular application desired.

As mentioned above, the vessel 12 also includes a bottom section 14 for accumulation and dewatering of solids. The bottom section 14 may be either hemispherical or conical, although conical is preferred for ease of fabrication. Preferably, the bottom section 14 has inclined sides as shown in FIG. 1, and these inclined sides should make an angle between 30-60° from the horizontal. An angle of about 45° is preferred, because such a conical shape is easiest to fabricate, poses the acceptable height penalty, while providing for a good flow of solids from the vessel 12. The approximately 45° to the vertical angle promotes slippage of solids along the wall 14 into the discharge sump 20.

The discharge sump 20 mounted beneath the bottom section 14 is preferably cylindrical with the bottom closed by bottom plate 34. The bottom plate of the sump may also be fitted with a steady bearing for the lower end of the shaft of the raking/dewatering device. A solids discharge line 38 is also connected to the sump 20 and this line 38 is connected to the inlet of a discharge pump (not shown). The thickened solids are preferably withdrawn at a flow rate of less than about 1 m/sec, to minimize pressure drops.

In an upper region of the pressure vessel 12 is mounted an elongated or deep feedwell 18 positioned to provide an annular space 19 between the feedwell 18 and the sidewall of the vessel 12. The letter S depicts an operating level for the surface of a thickened slurry bed within the vessel, while the letter L depicts a typical operating level for liquid in the vessel. The feedwell 18 has a bottom opening 46 a predetermined distance above the solids level S. The feedwell 18 also has a slurry feed inlet opening 27 to which is connected an inlet pipe 44, which includes a horizontal connector portion 43 and an elbow 45. Mounted within feed pipe 45 are a first flocculant injector 48 close to inlet opening 27 and a second flocculant injector 50 located upstream (relative to slurry flow) adjacent the elbow 45.

The upper portion of feedwell 18 includes an opening 26 which serves to discharge any gas that may be present and may also serve as a form of overflow weir permitting some return flow of clarified liquid downwardly through the feedwell 18. It is located between vent 30 and overflow 39.

The feed slurry inlet 27 for the best mode of operating the device is located at a distance of about 3 to 5 times the diameter of the feedwell 18 above the open bottom 46 and about 2 to 4 times the diameter from the top opening 26. The feedwell should be designed to provide a settling velocity of the flocs within a range of about 20 to 200 m/hr and in a typical commercial installation, the feedwell 18 has a diameter of about 700 mm, a length of about 4 metres and the bottom opening 46 positioned at least 2 metres above the solids level S. Other locations are possible and may be advantageous under certain conditions.

In order to provide a proper collection and discharge of the thickened slurry bed, a raking mechanism 21 is provided. This is connected to an axial drive shaft 52 which is driven from the top of vessel 12 via an electric or hydraulic motor 63 and gear reducer 65.

At the lower end of drive shaft 52, a pair of axially spaced crossbars 22 and 23 are connected thereto. Mounted to these crossbars 22 and 23 are a series of raking members including inclined edge rakes 25, upper edge rakes 66, lower edge rakes 68 and a series of vertical stirring bars 56, 58, 60 and 62. All of these rotate with the shaft 52, providing mixing of the slurry, dewatering of the settled solids, and raking of the walls to ease the discharge through discharge line 38.

The level of the thickened slurry is detected by means of pressure monitors mounted via connectors 24a, 24b and 24c in a sidewall of pressure vessel 12. Each detector unit comprises a tube portion 72 which extends through connector 24a, 24b, 24c into the interior of the pressure vessel 12. This tube 72 connects via an isolation valve 75, e.g. a gate or ball valve, to a further tube portion including a purging spool 76 connected to a flushing liquid line 74. The entire assembly connects to a sensor 73 which determines the pressure. A typical sensor is one sold by Rosemount, Inc. of Eden Prairie, Minnesota under Model 1151DP/GP and 1144G.

These sensors measure the pressure exerted against them at the point in the vessel where they are located. The higher the solids content, the greater the pressure exerted. Therefore, the sensor can detect the presence of denser solids containing liquid as opposed to clear liquid floating above the denser material.

Specifically the pressure displaces a remote diaphragm transmitting the measured pressure through a liquid filled system to the sensor 73. The transmitted pressure displaces a sensing diaphragm creating a differential capacitance between the sensing diaphragm and capacitor plates. This differential capacitance is converted to an electrical signal which can be measured by a suitable instrument to provide information on pressure differentials to operating a moving plotter or the like.

Four sensors are installed, the first sensor mounted at 24a some distance above the expected maximum top level of the bed of settling solids S as shown in FIG. 1. A second pair of sensors is located at levels 24b and 24c which is in the vicinity of the operational preferred level S of settling solids and midway between the upper and lower sensors, while the fourth sensor is located at level 24d some distance below the expected level of the top of the settling solids S. With this arrangement, the signals that are transmitted to monitor the solids level in vessel 12 represent the difference between sensors at 24a and 24b as the upper detector and between sensors at 24c and 24d as the lower detector.

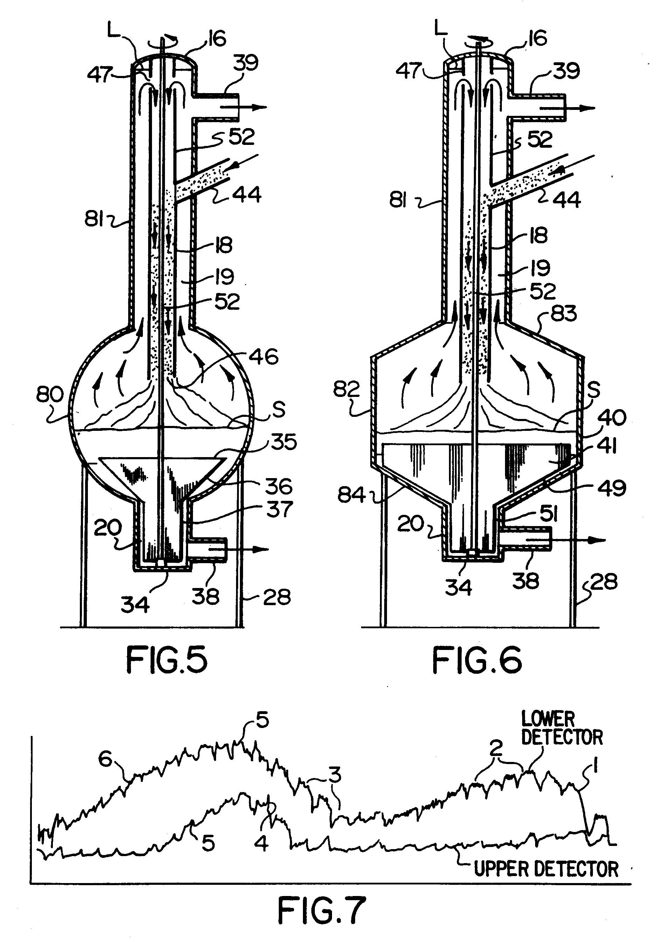

A typical reading from a moving plotter is shown in FIG. 7 for the upper detector and the lower detector. The numerals 1-6 in FIG. 7 have the following significances:
1. Lower mud level indication goes up.
2. Increase flocculant dosage.
   →Lower mud level indication goes down.
3. Decrease underflow rate.
   →Lower mud level indication goes up.
4. Upper mud level indication goes up (accumulation of mud)
5. Increase underflow rate to decrease mud level.
   →Upper mud level goes down.
6. Lower mud level goes down.
   →Mud inventory decreases.

It will of course, be appreciated that various other mechanisms are possible for measuring these differential pressures and other types of non-intrusive gauges may include those of ultrasonic sonar or radiation type (gamma gauge).

FIGS. 5 and 6 show two embodiments of the apparatus of the invention having a lower section of larger cross-section and a cylindrical upper section of smaller cross-section. Looking at FIG. 5, it includes a large spherical bottom portion 80 to the top end of which is connected a cylindrical portion 81 of much smaller diameter. The feedwell 18 is primarily mounted within the small cylindrical portion 81 with the lower end of feedwell 18 projecting into the large sphere. The top end of feedwell 18 has an opening 47 which permits upward discharge of gases and a return flow of some of the clear liquid which travels up the annular space 19 between feedwell 18 and cylindrical member 81.

The lower spherical member 80 is sufficiently large to permit separation of clarified liquid from flocculated solids as a discharge from the bottom outlet 46 such that the flocculated solids continue downwardly to collect on the surface of the solids S while the clarified liquid travels upwardly through the annular space 19.

A cylindrical sump 20 is connected to the bottom end of the sphere 80 and the solids discharge line 38 is connected to sump 20. A rotating rake member is connected to the bottom end of drive shaft 52 and this includes a horizontal portion 35, inclined portions 36 and vertical portions 37 extending downwardly into the sump 20.

FIG. 6 shows a design basically similar to that of FIG. 5, the primary difference being that the sphere 80 of FIG. 5 has been replaced by a relatively fat spherical member having a central spherical portion 82 with inclined upper walls 83 and inclined lower walls 84. Again, a sump 20 is connected to the lower end of the bottom inclined portion 84 and a rake member is connected to the lower end of drive shaft 52. This rake member includes a horizontal member 40, vertical members 41, inclined members 49 and vertical members 51 extending downwardly into the sump 20.

Having described the structure of the apparatus, its operation can now be understood with reference to the clarification of Bayer process slurry involving the separation of red mud solids from hot fresh pregnant Bayer process liquor still at approximately the same pressure and temperature as in the digestion process. Referring to FIGS. 1-4, a pressurized stream of Bayer process slurry including red mud and the pregnant liquor (not shown) enters through inlet pipe 44 wherein it receives two injections in two stages of flocculant from first and second injectors 48, 50. Preferably the flocculant used in an anionic sodium polyacrylate or similar flocculant suitable for settling red mud derived from bauxite, such as that available from Allied Colloids, Limited under the trademark ALCAR 600, diluted to a concentration of less than about 1.0% by weight. The minor portion 0-50%, preferably about 30%, of the total amount of flocculant is added through the second injection point 50 which is located near the elbow 45 in the slurry inlet pipe 44, near the highest point just after change in direction. At this point in the inlet pipe 44 maximum turbulence occurs. The slurry slides downward in the inclined inlet pipe 44 through this zone of maximum turbulence toward the feedwell 18, and receives by injection the major portion of the flocculant, between about 50% and about 100%, preferably about 70%, through the first flocculant injector 48. When the slurry is adjacent the entry to the feedwell, the velocity of the slurry is not greater than about 1 m/sec. The slurry enters the feedwell 18 where it is directed downwardly through the extended elongated column of the feedwell with flocculation and separation occurring within the column until it reaches the discharge opening 46. At this point, the velocity and kinetic energy of the slurry is such that the flocculated solids continue downwardly to settle on the surface of the bed of settling solids S, while the clarified liquid moves upwardly through annular space 19 without substantially disturbing the bed of settling solids. As the solids settle toward the bottom section 14, they lose more and more of their liquid content, and deposition is aided by rake 21 rotated by shaft 52. By the time they reach sump 20, they are most dense and may be withdrawn through discharge line 38. The final dewatering of solids from liquid is helped by the slow rotation of the shaft 52 turning rake 21.

The apparatus of FIGS. 5 and 6 work in essentially the same manner as that of FIGS. 1-4, except that in the apparatus of FIGS. 5 and 6 the annular zone is much smaller, resulting in a much greater flow rate of clarified liquid upwardly in the annular zone.

The following examples are meant to be illustrative of the practices of the invention and not intended to be limiting.

### Example 1

An improved pressure decanter in accordance with FIGURES 1 - 4 was used for a two-month period. The feed slurry of red mud was obtained by extracting Australian bauxite in 180 g/l caustic, expressed as Na₂CO₃, at 130-150°C. The resulting slurry of red mud contained from 50 to 90 g/L solids. During the test period, the slurry flowed into the decanter at a rate of up to 225 cubic meters per hour equivalent to processing up to 42 tons per hour of bauxite, depending on the alumina content. The rate of addition of synthetic flocculant was varied around the target level of 120 g/ton of bauxite. The upward velocity of the liquor in the annulus between the feedwell and the exterior wall of the vessel was about 21 m/hr, and the solids content of the underflow exiting from the decanter was between 40 and 50%.

### Example 2

The performance of the pressure decanter of the invention was compared with that of the conventional settlers operating at atmospheric and also with a deep settler operating at a temperature slightly above the atmospheric pressure boiling point of the liquid being separated, similar to that described in U.S.-A-5,080,030.

The pressure decanter of the invention was found to handle a mud load greater by an order of magnitude than the other settlers and to provide an overflow (O'F) clarity better by a factor of 2 or more. The suspended solids averaged 20-25 mg/L, compared with 200 mg/l for the conventional settlers. The invention gave a higher content of solids in the underflow (U/F) at 42% compared with 30-32% in the conventional equipment.

## Claims

1. An apparatus for separating solids suspended in an incoming liquid slurry feedstock including an elongated, upright vessel of generally circular cross-section (12) having a closed top end (16) and a bottom sump (20) for accumulating solids; a feedstock inlet (44) for feeding a liquid slurry into said vessel; a flocculant injector for injecting flocculant into the liquid slurry feedstock; an outlet (39) for discharging clarified liquid in an upper region of said vessel (12); an outlet (38) in said bottom sump (20) for removing separated solids; means (24) for detecting the level of a thickened slurry bed in the vessel, and a raking/ dewatering device (21) extending into said bottom sump (20),
characterized in that the feedstock inlet is a system for receiving pressurized liquid slurry including an elongated cylindrical feedwall (18) mounted axially in an upper region of said vessel (12) with an annular space between the feedwell (18) and vessel wall (12), said feedwell (18) having an open bottom (46) located below the clarified liquid outlet (39), an opening (26) in an upper region thereof and a feedstock inlet (27) for said liquid slurry feedstock located in a side wall of the feedwell (18) between the open bottom (46) and upper opening (26), said feedstock inlet (27) being located a distance above the open bottom (46) of the feedwell (18) sufficient to permit substantial flocculation of solids and clarification of liquid within the feedwell (18) and the open bottom (46) of the feedwell (18) being positioned above the surface (21) of a thickened slurry bed a distance sufficient to permit clarified liquid emerging downwardly from the bottom (46) of the feedwell (18) to separate from flocculated solids and travel upwardly in the annular space between the feedwell (18) and vessel walls (12) to discharge through said upper outlet (39) without substantially disturbing said thickened slurry bed, and said outlet (38) is adapted for removing separated solids under pressure.

2. An apparatus as claimed in claim 1 characterized in that the upper opening (26) in the feedwell (18) is located to permit a portion of the clarified liquid travelling up through the annular space to enter the feedwell through the opening such as to provide an inverted chimney effect within the feedwell.

3. An apparatus as claimed in claim 1 characterized in that the vessel (12) is a cylindrical vessel of substantially uniform cross-section.

4. An apparatus as claimed in claim 1 characterized in that the vessel comprises a lower section of larger cross-section (80, 82) and a cylindrical upper section or smaller cross-section (81).

5. An apparatus as claimed in claim 4 characterized in that the bottom (46) of the feedwell (18) extends into the larger lower section (80, 82).

6. An apparatus as claimed in claim 5 characterized in that the larger lower section (80) is spherical.

7. An apparatus as claimed in claim 5 characterized in that the larger lower section (82) is substantially cylindrical.

8. An apparatus as claimed in claim 1 characterized in that the sump (20) is a downwardly projecting substantially cylindrical section having a cross-section substantially smaller than the lower section (80, 82) of the vessel.

9. An apparatus as claimed in claim 4 characterized in that the diameter of the lower section (80, 82) is at least 1.75 times the diameter of the upper section (81).

10. An apparatus as claimed in claim 1 characterized in that the level detecting means are pressure differential detectors (24a, 24b, 24c, 24d) mounted in the cylindrical wall of the vessel (12).

11. An apparatus as claimed in claim 1 characterized in that the feedstock inlet system includes an inlet pipe (44) connected to said feed inlet, said pipe including said at least one flocculant injector (48, 50) mounted therein.

12. An apparatus as claimed in claim 11 characterized in that it includes two said flocculant injectors, the first injector (48) located adjacent said feed inlet and the second injector (50) located upstream from the first injector.

## Patentansprüche

1. Vorrichtung zum Absondern von in einem eintretenden flüssigen Rohschlamm suspendierten Festkörpern mit einem länglichen, aufrechten Gefäß mit im allgemeinen kreisförmigem Querschnitt (12) mit einem geschlossenen oberen Ende (16) und einem unteren Sumpf (20) zum Ansammeln der Festkörper; einem Einlaß (44) für Rohmaterial zum Zuführen von flüssigem Schlamm in das Gefäß; einer Einspritzvorrichtung für Flockungsmittel, zum Einspritzen von Flockungsmittel in den flüssigen Rohschlamm; einem Auslaß (39) zum Ablassen von gereinigter Flüssigkeit in einem oberen Bereich des Gefäßes (12); einem Auslaß (38) in dem unteren Sumpf (20) zum Entfernen von abgesonderten Festkörpern; Einrichtungen (24) zum Erfassen des Niveaus einer verdickten Schlammsohle in dem Gefäß, und einer Rechen/Entwässerungsvorrichtung (21), die sich in den unteren Sumpf (20) erstreckt,
dadurch **gekennzeichnet,** daß der Rohmaterialeinlaß ein System zur Aufnahme von unter Druck stehendem flüssigem Schlamm mit einer länglichen zylindrischen Zuführquelle (18) ist, die axial in einem oberen Bereich des Gefäßes (12) mit einem ringförmigen Raum zwischen der Zuführquelle (18) und der Gefäßwand (12) angebracht ist, wobei die Zuführquelle (18) einen offenen Boden (46), der unterhalb des Auslasses (39) für gereinigte Flüssigkeit angeordnet ist, eine Öffnung (26) in einem oberen Bereich und einen Rohmaterialeinlaß (27) für den flüssigen Rohschlamm aufweist, der in einer Seitenwand der Zuführquelle (18) zwischen dem offenen Boden (46) und der oberen Öffnung (26) angeordnet ist, wobei der Rohmaterialeinlaß (27) in einem Abstand oberhalb des offenen Bodens (46) der Zuführquelle (18) angeordnet ist, der hinreichend ist, um eine ausreichende Ausflockung von Festkörpern und eine Reinigung der Flüssigkeit innerhalb der Zuführquelle (18) zu ermöglichen, und wobei der offene Boden (46) der Zuführquelle (18) oberhalb der Oberfläche (21) einer verdickten Schlammsohle in einem Abstand angeordnet ist, der hinreichend ist, um zu ermöglichen, daß sich nach unten von dem Boden (46) der Zuführquelle (18) austretende gereinigte Flüssigkeit von ausgeflockten Festkörpern absondert und sich in dem ringförmigen Raum zwischen der Zuführquelle (18) und den Gefäßwänden (12) nach oben bewegt, um durch den oberen Auslaß (39) auszutreten, ohne daß die verdickte Schlammsohle erheblich gestört wird, und wobei der Auslaß (38) derart ausgebildet ist, daß abgesonderte Festkörper unter Druck entfernt werden können.

2. Vorrichtung nach Anspruch 1, dadurch gekennzeichnet, daß die obere Öffnung (26) in der Zuführquelle (18) derart angeordnet ist, daß ein Teil der sich durch den ringförmigen Raum nach oben bewegenden gereinigten Flüssigkeit in die Zuführquelle durch die Öffnung derart eintreten kann, daß für einen umgekehrten Kamineffekt innerhalb der Zuführquelle gesorgt wird.

3. Vorrichtung nach Anspruch 1, dadurch gekennzeichnet, daß das Gefäß (12) ein zylindrisches Gefäß mit im wesentlichen gleichmäßigem Querschnitt ist.

4. Vorrichtung nach Anspruch 1, dadurch gekennzeichnet, daß das Gefäß einen unteren Abschnitt mit größerem Querschnitt (80, 32) und einen zylindrischen oberen Bereich mit kleinerem Querschnitt (81) aufweist.

5. Vorrichtung nach Anspruch 4, dadurch gekennzeichnet, daß sich der Boden (46) der Zuführquelle (18) in den größeren unteren Bereich (80, 82) erstreckt.

6. Vorrichtung nach Anspruch 5, dadurch gekennzeichnet, daß der größere untere Bereich (80) sphärisch geformt ist.

7. Vorrichtung nach Anspruch 5, dadurch gekennzeichnet, daß der größere untere Bereich (82) im wesentlichen zylindrisch geformt ist.

8. Vorrichtung nach Anspruch 1, dadurch gekennzeichnet, daß der Sumpf (20) ein nach unten vorstehender, im wesentlichen zylindrischer Bereich mit einem Querschnitt ist, der im wesentlichen kleiner ist als derjenige des unteren Bereichs (80, 82) des Gefäßes.

9. Vorrichtung nach Anspruch 4, dadurch gekennzeichnet, daß der Durchmesser des unteren Bereichs (80, 82) wenigstens 1,75 mal dem Durchmesser des oberen Bereichs (81) beträgt.

10. Vorrichtung nach Anspruch 1, dadurch gekennzeichnet, daß die Einrichtungen zum Erfassen des Niveaus Druckunterschiedsdetektoren (24a, 24b, 24c, 24d) sind, die in der zylindrischen Wand des Gefäßes (12) angebracht sind.

11. Vorrichtung nach Anspruch 1, dadurch gekennzeichnet, daß das Rohmaterialeinlaßsystem ein Einlaßrohr (44) aufweist, das mit dem Zuführeinlaß verbunden ist, wobei das Rohr die wenigstens eine, darin angebrachte Einspritzvorrichtung (48, 50) für Flockungsmittel aufweist.

12. Vorrichtung nach Anspruch 11, dadurch gekennzeichnet, daß sie zwei Einspritzvorrichtungen für Flockungsmittel aufweist, wobei die erste Einspritzvorrichtung (48) an den Zuführeinlaß benachbart angeordnet ist, und die zweite Einspritzvorrichtung (52) stromaufwärts von der ersten Einspritzvorrichtung angeordnet ist.

## Revendications

1. Appareil pour séparer des solides suspendus dans une matière première arrivant sous forme d'une suspension liquide, incluant un récipient vertical, de forme allongée, de section (12) généralement circulaire comportant une extrémité supérieure fermée (16) et un puisard inférieur (20) pour accumuler des solides; une entrée (44) de matière première pour amener dans ledit réservoir une suspension liquide; un injecteur de floculant pour injecter un floculant dans la matière première sous forme de suspension liquide; une sortie (39), dans une région supérieure dudit récipient (12), pour évacuer le liquide clarifié; une sortie (38), dans ledit puisard inférieur (20), pour évacuer les solides séparés; des moyens (24) pour détecter, dans le récipient, le niveau du lit d'une suspension épaissie, et un dispositif de raclage/d'égouttage (21) s'étendant dans ledit puisard inférieur (20),
caractérisé par le fait que l'entrée de la matière première est un système prévu pour recevoir une suspension liquide sous pression, incluant un puits cylindrique allongé (18) d'amenée monté axialement dans une région supérieure dudit récipient (12), avec un espace annulaire entre le puits d'amenée (8) et la paroi du récipient (12), ledit puits d'amenée (18) ayant une extrémité inférieure ouverte (46) située en dessous de la sortie (39) du liquide clarifié, une ouverture (26) dans sa région supérieure et une entrée (27) de matière première, pour ladite matière première sous forme de suspension liquide, située dans une paroi latérale du puits d'amenée (18), entre l'extrémité inférieure ouverte (46) et l'ouverture supérieure (26), ladite entrée (27) de matière première étant située, au-dessus de l¹extrémité inférieure ouverte (46) du puits d'amenée (18), à une distance suffisante pour permettre une floculation substantielle des solides et une clarification du liquide à l'intérieur du puits d'amenée (18) et l'extrémité inférieure ouverte (46) du puits d'amenée (18) étant située au-dessus de la surface (21) du lit d'une suspension épaissie, à une distance suffisante pour permettre au liquide clarifié sortant, vers le bas, de la partie inférieure (46) du puits d'amenée (18) de se séparer d'avec les solides ayant floculé et de remonter vers le haut, dans l'espace annulaire existant entre le puits d'amenée (18) et les parois (12) du récipient pour s'évacuer par ladite sortie supérieure (39) sans perturber substantiellement ledit lit de suspension épaissie, et par le fait que ladite sortie (38) est conçue pour évacuer sous pression les solides séparés.

2. Appareil comme revendiqué dans la revendication 1, caractérisé par le fait que l'ouverture supérieure (26) prévue dans le puits d'amenée (18) est située pour permettre à une portion de liquide clarifié, remontant par l'espace annulaire, de pénétrer dans le puits d'amenée par l'ouverture de façon à créer dans le puits d'amenée un effet de cheminée inversé.

3. Appareil comme revendiqué dans la revendication 1, caractérisé par le fait que le récipient (12) est un récipient cylindrique de section transversale substantiellement uniforme.

4. Appareil comme revendiqué dans la revendication 1, caractérisé par le fait que le récipient comporte une portion inférieure de section transversale (80, 82) plus grande et une portion supérieure cylindrique de section transversale (81) plus petite.

5. Appareil comme revendiqué dans la revendication 4, caractérisé par le fait que la partie inférieure (46) du puits d'amenée (18) s'étend dans la portion inférieure (80, 82) de section transversale plus grande.

6. Appareil comme revendiqué dans la revendication 5, caractérisé par le fait que la portion inférieure (80) de section transversale plus grande est sphérique.

7. Appareil comme revendiqué dans la revendication 5, caractérisé par le fait que la portion inférieure (82) de section transversale plus grande est substantiellement cylindrique.

8. Appareil comme revendiqué dans la revendication 1, caractérisé par le fait que le puisard (20) est une portion sensiblement cylindrique saillant vers le bas et ayant une section transversale substantiellement inférieure à celle de la portion inférieure (81, 82) du récipient.

9. Appareil comme revendiqué dans la revendication 4, caractérisé par le fait que le diamètre de la portion inférieure (80, 82) est au moins 1,75 fois le diamètre de la portion supérieure (81).

10. Appareil comme revendiqué dans la revendication 1, caractérisé par le fait que les moyens de détection du niveau sont des détecteurs de différence de pression (24a, 24b, 24c, 24d) montés dans la paroi cylindrique du récipient (12).

11. Appareil comme revendiqué dans la revendication 1, caractérisé par le fait que le système d'entrée de la matière première inclut une conduite d'entrée (44) reliée à ladite entrée de la matière première, ladite conduite incluant ledit injecteur de floculant (48, 50), dont il y a au moins un, qui y est monté.

12. Appareil comme revendiqué dans la revendication 11, caractérisé par le fait qu'il comporte deux dits injecteurs de floculant, le première injecteur (48) situé près de ladite entée de matière premier et le second injecteur (50) situé en amont du premier injecteur.
